# EUROPEAN PATENT APPLICATION

(11) **EP 1 234 695 A1**
(43) Date of publication of application: **28.08.2002**
(21) Application number: 01200673.0
(22) Date of filing: 23.02.2001
(51) Int. Cl.: B60G 9/02

(54) **Damped suspended axle, in particular for agricultural machines, industrial vehicles and the like**

(71) Applicant: Dana Italia S.p.A, 38062 Arco (Trento) (IT)
(72) Inventor: Vincenti, Eugenio, 35010 Vigodarzere (Padova) (IT); Blini, Aldo, 24040 Calvenzano (Bergamo) (IT)
(74) Representative: Zanardo, Giovanni

(57) **Abstract**

A simplified damped suspended axle (11), in particular for agricultural machines, industrial vehicles and the like, comprises a support (12) which can be fixed to a chassis of an agricultural machine or industrial vehicle and is connected to a load-bearing element (26, 28) for the wheels. The support (12) is connected in an articulated way to the load-bearing element (26, 28), and set between the two is at least one shock-absorbing hydraulic cylinder (46, 50), in such a way that any stresses that may act on the chassis or on the axle (11) will cause oscillations of the load-bearing element (26, 28) with respect to the support (12), the said oscillations being damped by the shock-absorbing hydraulic cylinder (46, 50) with the aid of gas-charged accumulators.

## Description

The present invention refers to a simplified damped suspended axle, in particular for agricultural machines, industrial vehicles and the like.

In what follows particular reference will be made to a front axle of a tractor; it is, however, clear that an axle according to the present invention can be advantageously mounted on any type of agricultural machine or industrial vehicle that is designed to move around and/or work in off-road conditions, for example in fields, as well as on the road.

As is known, all vehicles provided with four wheels are redundant structures, and, in order not to jump about when travelling, must have their wheels free to adapt to the other than perfect evenness of the ground.

Traditionally, the wheels are supported in pairs by two axles, a rear one and a front one, which are fixed in different ways to the chassis of the vehicle. The structure of the axles proves particularly complicated above all for the front axle, which is required to perform both the function of steering and the function of traction.

In traditional tractors, the front wheels are supported by a front axle which oscillates or rocks transversely with respect to the agricultural machine or industrial vehicle. This solution, albeit economical and technically valid as long as the speed of tractors used to have a somewhat limited value (less than 30-40 km/h), has proved altogether unsuitable for latest-generation tractors. The latter, in fact, have the possibility of moving around freely both off road, in fields, and on the road, at speeds that may even be high, the said speeds possibly reaching for the vehicles in question values of 50-60 km/h. At such speeds, a simple oscillating or rocking axle according to traditional embodiments proves not only very fatiguing for the tractor driver but also far from safe on account of the poor adherence of the wheels to the ground.

A purpose of the present invention is, therefore, to eliminate the technical problems referred to above by providing a simplified damped suspended axle, in particular for agricultural machines, industrial vehicles and the like, which is safe in all driving conditions, both off road and on bumpy roads, as well as on asphalted roads, and both at low vehicle speeds and at high vehicle speeds.

Another purpose of the present invention is to provide a simplified damped suspended axle that will guarantee high driving comfort for the driver. This obviously results in very reduced fatigue for the driver.

Yet another purpose of the present invention is to provide a simplified damped suspended axle that is substantially economical.

Not the least important purpose of the present invention is to provide a simplified damped suspended axle, in particular for agricultural machines, industrial vehicles and the like, which is substantially simple, safe and reliable.

These and other purposes according to the present invention are achieved by providing a simplified damped suspended axle, in particular for agricultural machines, industrial vehicles and the like, in accordance with Claim 1.

Other characteristics of the present invention are further defined in the subsequent claims.

Advantageously, a simplified damped suspended axle according to the present invention guarantees greater traction, and hence also a higher productivity. In addition to enabling energy saving and lower tyre consumption, this fact makes possible an increase and amplification of the operating possibilities of the tractor.

An axle built according to the present invention affords a high self-stabilizing capacity and moreover makes it possible to increase considerably the capacity for damping the stresses resulting from possible impact on the vehicle from the variable conditions of the terrain.

In addition, the axle according to the present invention is equipped with a very compact assembly which groups together all the auxiliary elements required for axle operation.

In particular, forming part of the said assembly are gas-charged accumulators, a valve assembly, and an electronic control unit.

Further characteristics and advantages of a simplified damped suspended axle, in particular for agricultural machines, industrial vehicles and the like, according to the present invention, will emerge more clearly from the ensuing description, which is given to provide a non-limiting example, with reference to the annexed schematic drawings, in which:

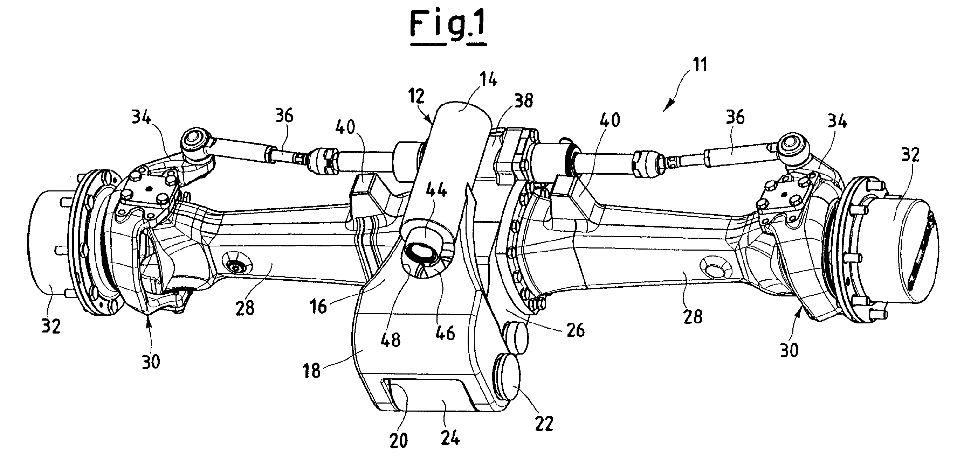

Figure 1 shows a perspective view of an axle according to the present invention;

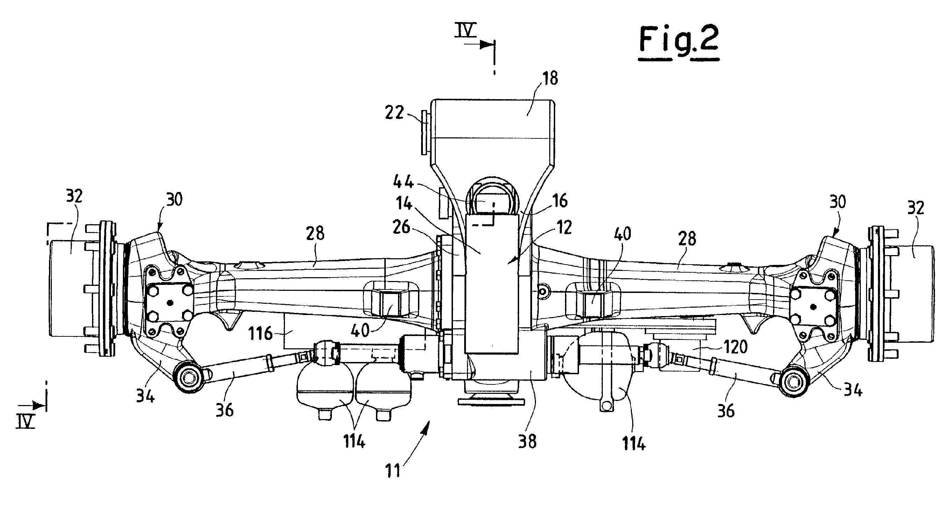

Figure 2 presents a top plan view of the axle of Figure 1;

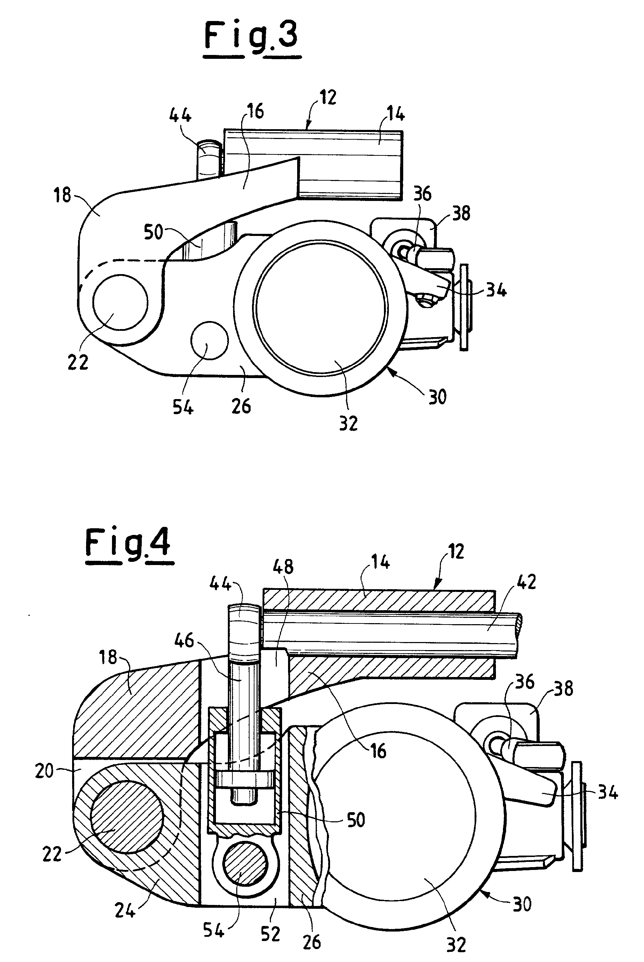

Figure 3 shows a side elevation view of the axle of Figure 1;
Figure 4 shows an enlarged cross section, according to the line IV-IV of Figure 2, of the axle according to the present invention; and
Figure 5 shows a rear elevation view of a portion of the axle of Figure 2 according to the present invention.

With particular reference to the above figures, a simplified damped suspended axle is illustrated, in particular for use in agricultural machines, industrial vehicles and the like, the axle as a whole being designated by the reference number 11.

The axle 11 comprises a top support 12 which can be anchored to a chassis of an agricultural machine or industrial vehicle, the latter not being shown for reasons of simplicity.

The support 12 comprises a tubular top end 14 which is integral with a plate 16 that extends towards the front part of the axle and widens at its free end, in such a way as to identify a widened extension 18. The "front part of the axle" of course refers to a situation in which the axle 11 is mounted on a machine or vehicle.

The extension 18 has a recess 20, made at its free end on the side of the axle 11 opposite to the one where the tubular end 14 is set. The recess 20 is delimited laterally by two portions of the extension 18, each of said two portions being provided with a through hole inside which a first pin 22 is inserted.

The pin 22 is inserted in a through hole of a block 24, which, in turn, is inserted in the recess 20. By means of the pin 22, the block 24 is pivoted to the extension 18 of the support 12.

The block 24 is integral with a central body 26 of the axle 11, the said central body 26 being hollow and containing a differential.

Integral with the central body 26 are two arms 28, in such a way as to form a load-bearing element of the axle 11. Each of the arms 28 carries, at its free end, a steering wheel hub assembly 30. Each wheel hub 30 is moreover provided with a disk 32 for fixing the wheels (the latter not being shown for reasons of simplicity).

As is known, each disk 32 can turn with respect to the wheel hub 30 and, for this reason, is connected to an axle shaft contained inside the arms 28, and hence not shown. Each axle shaft is in turn connected to the differential contained inside the central body 26 of the axle 11.

Each of the two wheel hubs 30 has a projecting lever 34 which is connected to an articulated rod 36 which can be actuated in translation, for controlling steering of the wheel-hub assemblies 30, by a steering actuator 38.

Mounted on each of the arms 28 is a stop 40 designed to limit the oscillations of the axle 11.

Inserted in the tubular end 14 is a pin 42 for anchorage of the axle 11 to the chassis of the agricultural machine or industrial vehicle.

One end of the pin 42, which projects on the side of the extension 18, is inserted in a ball-and-socket joint 44 which is integral with a rod 46 of a shock-absorbing element.

The rod 46 passes through a through opening 48 of the plate 16 and inserts inside a hydraulic cylinder 50 of the shock-absorbing element. Inside the through opening 48 is partially inserted also one end portion of the cylinder 50. The cylinder 50, in turn, is inserted through a second through opening 52 of the block 24 and is pivoted to the block 24 itself by means of a pin 54, which is set transversely with respect to the through opening 52.

The rod 46 carries, at one of its ends, a piston that can slide in a sealed way inside the cylinder 50. Furthermore, the cylinder 50 is connected, when the axle 11 is mounted, to a gas-charged accumulator (not shown) which bestows on the cylinder the damping action in so far as it is connected to the cylinder by means of a fluid, usually oil, under pressure.

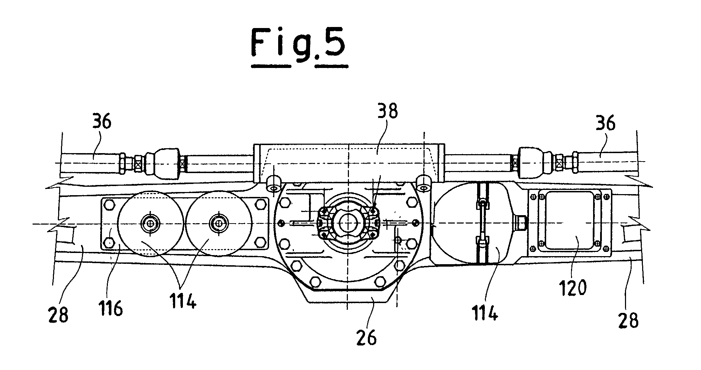

The cylinder 50 is connected to gas-charged accumulators 114 by means of pipes (not shown for reasons of simplicity). As may be clearly seen in Figure 5, the accumulators 114 are three in number, one of a larger size and two of a smaller size. The two smaller-sized accumulators 114 are supported by a valve assembly 116, which is in turn supported by one of the arms 28 of the axle 11. The remaining larger-sized accumulator 114 is directly fixed to the arm 28 of the axle 11. In a position adjacent to the larger-sized accumulator 114 is fixed an electronic control unit 120 which controls opening and/or closing of solenoid valves (not shown) designed to set the cylinder 50 in communication with the accumulators 114 and with the hydraulic circuit of the machine or vehicle.

Operation of the simplified damped suspended axle 11, in particular for agricultural machines, industrial vehicles and the like, according to the present invention, is basically as described in what follows.

The axle 11 is anchored to the chassis of the agricultural machine or industrial vehicle. Subsequently, the inside of the cylinder 50 is connected to the gas-charged accumulators.

When the axle 11 is mounted underneath the chassis of the vehicle, it can be operated in two different modes.

According to a first operating mode, the cylinder 50 does not have oil under pressure in its chambers, and the rod 46 comes down, bringing the piston that is integral with the rod 46 into contact with the bottom of the cylinder 50. In this situation, the axle 11 operates as a traditional axle, being able only to oscillate or swing about the pin 42.

According to a second operating mode, instead, fluid under pressure is introduced into the two chambers of the cylinder 50.

In this case, any stresses on the chassis of the machine or vehicle or on the axle 11 itself move the rod 46 in one of two directions, either towards the inside or towards the outside of the cylinder 50. In this situation, the body 26 oscillates, with respect to the support 12, about the pin 22, and, at the same time, the oil contained in the cylinder 50, passing into the gas-charged accumulators dampens the oscillations. Both the cylinder 50 and the rod 46 can oscillate about two axes that are parallel to the pin 22; namely, the cylinder 50 can oscillate about the pin 54, and the rod 46 can oscillate about the ball-and-socket joint 44.

Modifications and variations to the axle 11 according to the present invention, in addition to the ones already mentioned, are of course possible.

For example, the axle 11 may be provided with two shock-absorbing elements or cylinders set at the sides of the extension 18. Obviously, besides being set at the front of the axle 11 according to the invention, when the latter is mounted on a machine or vehicle, the shock-absorbing elements or hydraulic cylinders may be set also at the rear, without the operation of the axle 11 according to the invention undergoing substantial modifications. In these cases, the tubular top end 14 has two attachment points to which the top ends of the shock-absorbing elements are fixed by means of ball-and-socket joints.

In practice, it has been noted that the simplified damped suspended axle according to the invention, in particular for use on agricultural machines, industrial vehicles and the like, is particularly advantageous in so far as it is very safe and ensures a high degree of driving comfort for the driver, together with a very limited fatigue.

In addition, the very compact assembly of auxiliary elements, all of which, on the other hand, are integral with the axle, enables easy accessibility to the said auxiliary elements and a reduction in overall dimensions, as well as guaranteeing a high level of reliability.

The simplified damped suspended axle, in particular for agricultural machines, industrial vehicles and the like, as it is conceived, may undergo numerous additional modifications and variations, all falling within the scope of the present invention. Furthermore, all the items may be replaced with others that are technically equivalent.

In practice, the materials used, as well as the dimensions, may be any whatsoever according to the technical requirements.

## Claims

1. A simplified damped suspended axle (11), in particular for agricultural machines, industrial vehicles and the like, comprising a support (12) which can be fixed to a chassis of said agricultural machine or industrial vehicle, said support (12) being connected to a load-bearing element (26, 28) for the wheels, **characterized in that** said support (12) is pivoted to said load-bearing element (26, 28), and **in that**, set between the two, is at least one shock-absorbing element (46, 50), in such a way that any stresses that may act on said chassis or on said axle (11) will cause oscillations of said load-bearing element (26, 28) with respect to said support (12), said oscillations being damped by said shock-absorbing element (46, 50).

2. A simplified axle (11) according to Claim 1, **characterized in that** said support (12) has at least one extension (18) pivoted to which is said load-bearing element (26, 28).

3. A simplified axle (11) according to Claim 2, **characterized in that** said extension (18) extends towards a front part of said axle (11), with reference to a situation in which said axle (11) is mounted on a machine or vehicle.

4. A simplified axle (11) according to Claim 2, **characterized in that** said extension (18) has at least one recess (20), at one of its ends that is free, a block (24) of said load-bearing element (26, 28) being inserted and pivoted in said recess.

5. A simplified axle (11) according to Claim 2, **characterized in that** said support (12) comprises at least one tubular end (14) which is integral with said extension (18), from said tubular end (14) there projecting a first pin (42) to which one first end of said shock-absorbing element (46, 50) is connected.

6. A simplified axle (11) according to Claim 5, **characterized in that** said first end of said shock-absorbing element (46, 50) is connected to said first pin (42) at a front part of said axle (11), with reference to a situation in which the latter is mounted on a machine or vehicle; in addition, said shock-absorbing element (46, 50) passes through a through opening (48) of said support (12) to connect up to said load-bearing element (26, 28).

7. A simplified axle (11) according to Claim 6, **characterized in that** also said load-bearing element (26, 28) has at least one through opening (52) in which said shock-absorbing element (46, 50) is inserted.

8. A simplified axle (11) according to Claim 5, **characterized in that** said first end of said load-bearing element (46, 50) is connected to said pin (42), which projects from said tubular end (14), at least by means of a ball-and-socket joint (44).

9. A simplified axle (11) according to Claim 1, **characterized in that** it supports at least one valve assembly (116), which in turn supports at least one gas-charged accumulator (114) associated to said shock-absorbing element (46, 50).

10. A simplified axle (11) according to Claim 9, **characterized in that** one of its arms (28) supports at least one electronic control unit (120).

11. A simplified axle (11) according to Claim 1, **characterized in that** said shock-absorbing element (46, 50) comprises at least one hydraulic cylinder (50) associated to a rod (46).

12. A simplified axle (11) according to Claim 1, **characterized in that** said shock-absorbing elements (46, 50) are connected at the rear of said axle (11), with reference to a situation in which the latter is mounted on a machine or vehicle.
